# EUROPÄISCHE PATENTSCHRIFT

(11) **EP 3 184 435 B1**
(45) Veröffentlichungstag und Bekanntmachung des Hinweises auf die Patenterteilung: **15.08.2018**
(21) Anmeldenummer: 16205426.6
(22) Anmeldetag: 20.12.2016
(51) Int. Cl.: B64D 29/08, B64D 29/06, E05D 7/04

(54) **TRIEBWERKSVERKLEIDUNG**
ENGINE COWL
CAPOT MOTEUR

(30) Priorität: 22.12.2015 DE 102015226543
(43) Veröffentlichungstag der Anmeldung: 28.06.2017
(73) Patentinhaber: Rolls-Royce Deutschland Ltd & Co KG, 15827 Blankenfelde-Mahlow (DE)
(72) Erfinder: Gonzalez Prieto, Gonzalo, 14482 Potsdam (DE)
(74) Vertreter: Hoefer & Partner Patentanwälte mbB

(56) Entgegenhaltungen:
- DE-A1- 2 918 123
- DE-A1- 3 500 423
- DE-A1- 3 522 670
- US-A- 6 155 520
- US-A1- 2002 073 509

## Beschreibung

Die Erfindung betrifft eine Triebwerksverkleidung mit einstellbaren Türelementen, um ein exaktes Schließen der Türelemente an der Triebwerksverkleidung oder dergleichen zu ermöglichen.

Triebwerksverkleidungen, insbesondere Flugtriebwerksverkleidungen, weisen üblicherweise große Türelemente auf, welche über Scharniere mit einem Gehäuseteil oder einem anderen Teil der Triebwerksverkleidung verbunden sind. Üblicherweise sind hierbei zwei Türelemente vorgesehen, welche sich in entgegengesetzte Richtungen aufklappen lassen, um bei Wartungsarbeiten einen möglichst guten Zugang zum Triebwerk zu ermöglichen. Hierbei kann sich das Problem ergeben, dass sich die Türelemente nicht exakt schließen lassen bzw. ein großer Spalt und/oder ein Versatz zwischen den geschlossenen Türelementen oder dem Türelement und einem Gehäuseteil der Triebwerksverkleidung vorhanden ist. In derartigen Fällen besteht die Gefahr, dass ein Mechaniker das Türelement und/oder das Gehäuseteil bei einem Versuch, diese zu verriegeln, beschädigt. Weiterhin sind evtl. vorhandene Spalte in der Triebwerksverkleidung an Stoßkanten voneinander benachbarten Verkleidungsbauteilen nachteilig für eine Luftströmung, was im Betrieb zu einem zusätzlichen Widerstand und zusätzlichen Verlusten führt. Weiterhin erwecken auch nicht gut passende Teile optisch und ästhetisch einen nicht akzeptablen Eindruck beim Kunden.

Aus der US 6 155 520 A ist eine Triebwerksverkleidung gemäß dem Oberbegriff des Anspruchs 1 bekannt. Ferner zeigen die Druckschriften US 2002/073509 A1, die DE 35 00 423 A1 und die DE 35 22 670 A1 Scharniere, insbesondere für Möbel, welche Verstellmöglichkeiten aufweisen.

Es ist daher Aufgabe der vorliegenden Erfindung, eine Triebwerksverkleidung bereitzustellen, welche bei einfachem Aufbau und einfacher, kostengünstiger Herstellbarkeit eine Verstellmöglichkeit einer Relativposition zwischen einem Gehäuseteil der Verkleidung oder dergleichen und einem Türelement der Triebwerkverkleidung oder zwischen zwei Triebwerksverkleidungsteilen im geöffneten und/oder geschlossenen Zustand ermöglicht.

Diese Aufgabe wird durch eine Triebwerksverkleidung mit den Merkmalen des Anspruchs 1 gelöst. Die Unteransprüche zeigen bevorzugte Weiterbildungen der Erfindung.

Die erfindungsgemäße Triebwerksverkleidung mit den Merkmalen des Anspruchs 1 weist den Vorteil auf, dass eine einfache Relativverstellung und somit eine Verstellung einer Position eines Türelements relativ zu einem Verkleidungsteil, z. B. einem Gehäuseteil oder dergleichen einer Triebwerksverkleidung möglich ist. Dadurch können herstellungsbedingte Spalte oder Überlappungen durch die einstellbare Position des Türelements ausgeglichen werden. Auch können geometrische Veränderungen des Türelements und/oder des Gehäuseteils, welche z. B. aufgrund der Temperaturen im Betrieb an der Triebwerksverkleidung auftreten können, ausgeglichen werden. Dies wird erfindungsgemäß dadurch erreicht, dass die Triebwerksverkleidung wenigstens ein Scharnier aufweist, welches ein Verkleidungsteil und ein Türelement miteinander zum Öffnen und Schließen verbindet. Das Scharnier weist eine dreidimensionale Verstellbarkeit in eine erste, zweite und dritte Richtung auf, um eine Relativposition des Türelements zum Verkleidungsteil zu verändern. Somit kann durch die Erfindung ein Spalt oder eine Überlappung zwischen dem Türelement und einem Verkleidungsbauteil, z. B. einem Gehäuseteil der Triebwerksverkleidung, durch das einstellbare Scharnier ausgeglichen werden. Da üblicherweise das Türelement aufgrund seiner Größe mit mehreren Scharnieren am ersten Verkleidungsteil fixiert ist, sind bevorzugt alle Scharniere einstellbar ausgebildet. Somit kann erfindungsgemäß vermieden werden, dass Spalte und/oder Überlappungen an der Triebwerksverkleidung vorhanden sind, wodurch im Betrieb eine verlustfreiere Strömung an der Triebwerksverkleidung möglich ist.

Das Scharnier umfasst ein erstes und ein zweites Scharnierelement. Das erste Scharnierelement ist dabei in der ersten und zweiten Richtung verstellbar und das zweite Scharnierelement ist in der dritten Richtung verstellbar. Somit wird die dreidimensionale Verstellbarkeit des Scharniers auf das erste und das zweite Scharnierelement verteilt.

Weiter umfasst das erste Scharnierelement einen ersten Basisbereich und einen ersten Deckelbereich. Hierbei ist eine Relativposition zwischen dem ersten Basisbereich und dem ersten Deckelbereich veränderbar. Der erste Deckelbereich ist dabei bevorzugt mit einem Scharnierkörper verbunden.

Hierbei ist zwischen dem ersten Basisbereich und dem ersten Deckelbereich eine erste Zahnstangen-Ritzel-Anordnung mit einem ersten Ritzel und einem ersten Verzahnungsbereich für eine Relativverstellung in die erste Richtung vorgesehen.

Ein besonders einfacher Aufbau und eine exakte Verstellbarkeit ergibt sich, wenn die erste, zweite und dritte Richtung jeweils zueinander senkrecht vorgesehen sind. Somit kann eine genaue Verstellung des Türelements relativ zum ersten Verkleidungsteil erfolgen, wobei kurze Verstellwege möglich sind.

Das zweite Scharnierelement umfasst ebenfalls bevorzugt einen zweiten Basisbereich und einen zweiten Deckelbereich, deren Relativposition zueinander veränderbar ist. Zwischen dem zweiten Basisbereich und dem zweiten Deckelbereich ist eine zweite Zahnstangen-Ritzel-Anordnung mit einem zweiten Ritzel und einem zweiten Verzahnungsbereich vorgesehen, um eine Relativverstellung in die zweite Richtung vorzusehen.

Ein einfacher Aufbau und insbesondere eine einfache Verstellbarkeit ergibt sich, wenn das erste Scharnierelement ein erstes und/oder ein zweites Schneckenelement umfasst. Das erste Schneckenelement treibt dabei das erste Ritzel der ersten Zahnstangen-Ritzel-Anordnung direkt oder indirekt an und das zweite Schneckenelement treibt das zweite Ritzel der zweiten Zahnstangen-Ritzel-Anordnung direkt oder indirekt an. Somit kann durch Drehen des ersten und/oder zweiten Schneckenelements eine Relativverstellung zwischen dem ersten Basisbereich und dem ersten Deckelbereich ermöglicht werden. Hierdurch ist am ersten Scharnierelement eine Verstellbarkeit in einer Ebene definiert. Die Ebene wird durch die erste und zweite Richtung der Verstellung aufgespannt.

Vorzugsweise weisen das erste und zweite Schneckenelement jeweils einen Werkzeug-Eingriffsbereich auf. Ferner sind in der Triebwerksverkleidung erste und zweite Öffnungen vorgesehen, wobei der Werkzeugeingriffsbereich jeweils an einer der Öffnungen angeordnet ist. Dadurch kann der Werkzeugeingriffsbereich mittels eines Werkzeugs, welches durch die Öffnungen hindurchgeführt wird, erreicht werden und eine Verstellung ausgeführt werden. Dabei ist insbesondere eine Verstellung im geschlossenen Zustand der Triebwerksverkleidung möglich. Es sei angemerkt, dass auch bei geöffneter Triebwerksverkleidung eine Verstellung möglich ist.

Weiter bevorzugt umfasst das zweite Scharnierelement einen zweiten Basisbereich und einen zweiten Deckelbereich. Zwischen dem zweiten Basisbereich und dem zweiten Deckelbereich ist eine Gewindeverbindung, insbesondere umfassend einen Gewindebolzen und ein Innengewinde vorgesehen. Die Verstellung des zweiten Scharnierelements erfolgt dabei durch eine Relativbewegung zwischen dem zweiten Basisbereich und dem zweiten Deckelbereich. Hierbei ist lediglich eine Verstellung in eine dritte Richtung, nämlich einer Achse des Gewindebolzens, möglich. Der Gewindebolzen wird dabei in das Innengewinde weiter eingeschraubt oder weiter ausgeschraubt, um eine Relativposition zwischen dem zweiten Basisbereich und dem zweiten Deckelbereich zu verändern.

Vorzugsweise weist die Triebwerksverkleidung eine dritte Öffnung auf, wobei der Gewindebolzen der Gewindeverbindung an der dritten Öffnung angeordnet ist. Hierbei kann wiederum ein Werkzeug durch die dritte Öffnung hindurchgeführt werden, um den Gewindebolzen zu drehen, sodass eine Relativposition verstellt werden kann.

Weiter bevorzugt umfasst die Triebwerksverkleidung ein erstes Sicherungselement, welches mit Spiel in der ersten und zweiten Richtung der Verstellung zwischen dem ersten Basisbereich und dem ersten Deckelbereich angeordnet ist. Das Spiel ist dabei notwendig, um die Verstellung des ersten Basisbereichs relativ zum ersten Deckelbereich zu ermöglichen. Das erste Sicherungselement stellt somit eine Verliersicherung bereit, um den ersten Basisbereich und den ersten Deckelbereich als Baueinheit zusammenzuhalten. Das erste Sicherungselement ist vorzugsweise ein Bolzen mit zwei Köpfen oder dergleichen, wobei jeweils an jedem Bolzenende ein Kopf angeordnet ist.

Weiter bevorzugt umfasst die Triebwerksverkleidung ein zweites Sicherungselement, welches zwischen dem zweiten Basisbereich und dem zweiten Deckelbereich angeordnet ist. Das zweite Sicherungselement kann ebenfalls ein Bolzen mit zwei Köpfen sein oder kann ein Gewindebolzen mit zugehöriger Mutter sein, wobei am Gewindebolzen ein mit Gewinde versehener Bereich und ein gewindefreier Bereich vorgesehen ist.

Die erfindungsgemäße Triebwerksverkleidung ist vorzugsweise eine Flugtriebwerksverkleidung.

Nachfolgend wird unter Bezugnahme auf die begleitende Zeichnung ein bevorzugtes Ausführungsbeispiel der Erfindung im Detail beschrieben. In der Zeichnung sind gleiche bzw. funktionsgleiche Teile mit den gleichen Bezugszeichen bezeichnet. In der Zeichnung ist:
- Fig. 1: eine schematische, perspektivische Ansicht einer Triebwerksverkleidung gemäß einem Ausführungsbeispiel der Erfindung,
- Fig. 2: eine schematische, perspektivische Ansicht eines Scharniers von Fig. 1,
- Fig. 3: eine schematische, perspektivische Explosionsdarstellung eines ersten Scharnierelements des Scharniers von Fig. 2,
- Fig. 4: eine schematische Schnittansicht eines Sicherungselements des ersten Scharnierelements von Fig. 3,
- Fig. 5a, 5b, 5c, 5d: schematische Ansichten einer Verstelleinrichtung des ersten Scharnierelements von Fig. 3, und
- Fig. 6: eine schematische Schnittansicht eines zweiten Scharnierelements des Scharniers von Fig. 2.

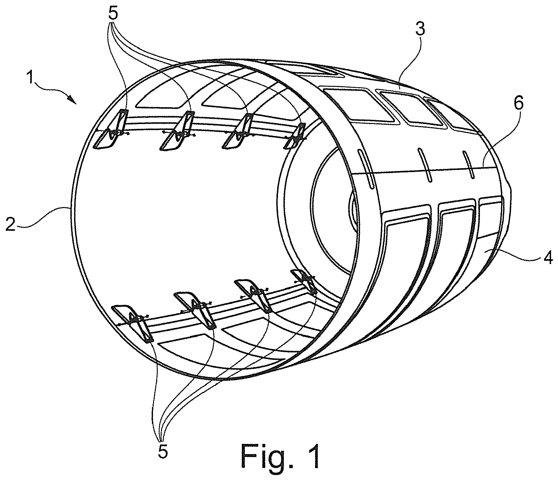

Nachfolgend wird unter Bezugnahme auf die Fig. 1 bis 6 eine Triebwerksverkleidung 1 gemäß einem bevorzugten Ausführungsbeispiel der Erfindung im Detail beschrieben.

Fig. 1 zeigt schematisch eine perspektivische Ansicht einer Triebwerksverkleidung 1, welche ein tonnenförmiges Gehäuse um ein nicht gezeigtes Triebwerk bildet. Die Triebwerksverkleidung 1 umfasst ein Gehäuseteil 2 (Verkleidungsteil), ein erstes Türelement 3 und ein zweites Türelement 4. Das erste Türelement 3 ist mittels einer Vielzahl von Scharnieren 5 am Gehäuseteil 2 angelenkt. Das zweite Türelement 4 ist ebenfalls mit einer Vielzahl von Scharnieren 5 am Gehäuseteil 2 angelenkt. Das Gehäuseteil 2 ist an einem Flugzeug oder dergleichen befestigt. Die Türelemente stoßen dabei an einer Stoßkante 6 zusammen.

Die Türelemente 3, 4 verlaufen über die gesamte axiale Länge der Triebwerksverkleidung 1.

Wie aus Fig. 1 ersichtlich ist, sind die beiden Türelemente 3, 4 beide gleich groß ausgebildet und überdecken jeweils eine Umfangsfläche, welche ungefähr doppelt so groß ist, wie die Umfangsfläche des Gehäuseteils 2. Dadurch kann ein größerer Öffnungsbereich beim gegenläufigen Öffnen der beiden Türelemente 3, 4 erhalten werden, sodass Wartungsarbeiten oder dergleichen am Triebwerk einfach ausgeführt werden können.

In diesem Ausführungsbeispiel sind genau vier Scharniere 5 zur Fixierung jedes Türelements 3, 4 am Gehäuseteil 2 vorgesehen.

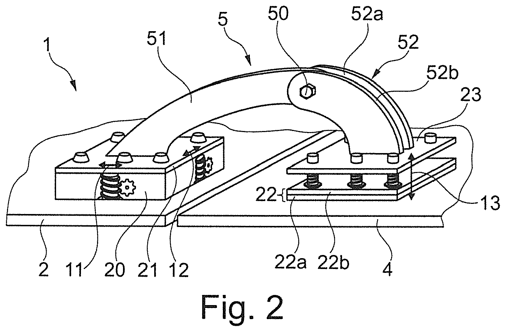

Das Scharnier 5 ist im Detail aus den Fig. 2 bis 6 ersichtlich.

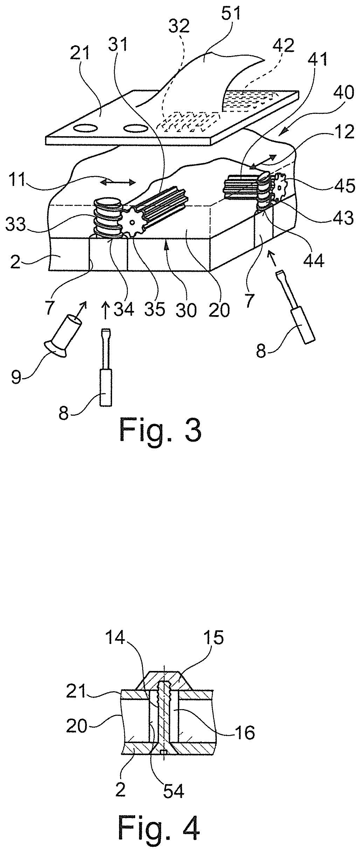

Das Scharnier 5 umfasst ein erstes Scharnierelement 51, ein zweites Scharnierelement 52 und einen Bolzen 50. Der Bolzen 50 verbindet das erste Scharnierelement 51 mit dem zweiten Scharnierelement 52. Jedes der Scharnierelemente weist Befestigungsöffnungen 54 auf (vgl. Fig. 4), um eine Fixierung des Scharniers am Gehäuseteil 2 bzw. an den Türelementen 3, 4 zu ermöglichen.

Um Spalte und/oder Überlappungen von benachbarten Türelementen 3, 4 und einander benachbarten anderen Verkleidungsteilen der Triebwerksverkleidung auszugleichen, weist jedes Scharnier eine Verstelleinrichtung auf. Die Scharniere sind dabei dreidimensional in eine erste Richtung 11, eine zweite Richtung 12 und eine dritte Richtung 13 verstellbar. Die drei Richtungen 11, 12, 13 sind dabei jeweils senkrecht zueinander.

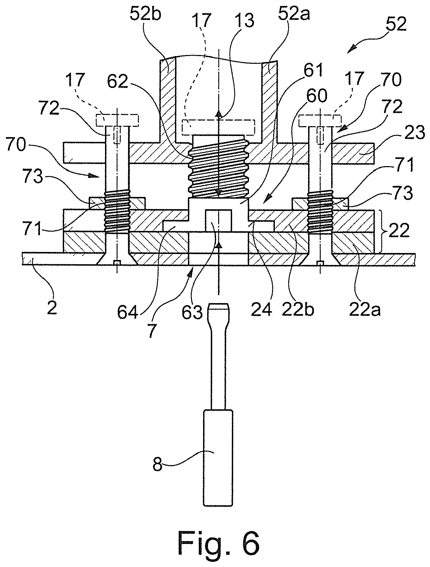

Die Verstelleinrichtung des Scharniers ist hierbei auf die beiden Scharnierelemente 51, 52 verteilt. Genauer weist das erste Scharnierelement 51 einen ersten Teil der Verstelleinrichtung des Scharniers auf, welche eine Verstellung in die erste Richtung 11 und die zweite Richtung 12 ermöglicht. Fig. 3 zeigt dabei schematisch die beiden Richtungen 11, 12, welche senkrecht zueinander sind und eine Ebene aufspannen. Ein zweiter Teil der Verstelleinrichtung ist im zweiten Scharnierelement 52 vorgesehen, wobei der zweite Teil der Verstelleinrichtung eine Verstellung nur in eine Richtung, nämlich die dritte Richtung 13 ermöglicht (s. Fig. 2 und 6). Die drei Richtungen sind in den Figuren durch die Doppelpfeile gekennzeichnet.

Das Scharnier 5 gemäß dem ersten Ausführungsbeispiel weist dabei grundsätzlich einen Aufbau derart auf, dass die beiden Scharnierelemente 51, 52 im Wesentlichen einen zweiteiligen Fuß aufweisen, mit welchem die Scharnierelemente an den Verkleidungsteilen der Triebwerksverkleidung bzw. den Türelementen fixiert sind. Ein Scharnierkörper oder -arm ist dann am zweiteiligen Fuß angeordnet. Wie insbesondere aus Fig. 2 und 3 ersichtlich ist, weist das erste Scharnierelement 51 dabei einen ersten Basisbereich 20 und einen ersten Deckelbereich 21 auf, welche zusammen den Fuß des ersten Scharnierelements 51 bilden. Dabei kann eine Relativverstellung zwischen dem ersten Basisbereich 20 und dem ersten Deckelbereich 21 durch den ersten Teil der Verstelleinrichtung ermöglicht werden.

Das zweite Scharnierelement 52 weist einen ähnlichen Aufbau mit einem zweiten Basisbereich 22 und einem zweiten Deckelbereich 23 auf. Wie aus Fig. 2 und 6 ersichtlich ist, ist der zweite Basisbereich 22 des zweiten Scharnierelements 52 durch zwei Platten, nämlich eine erste Platte 22a und eine zweite Platte 22b bereitgestellt.

Ein großer Vorteil des dreidimensional verstellbaren Scharniers 5 liegt darin, dass eine Verstellung sowohl im offenen als insbesondere auch im geschlossenen Zustand der Triebwerksverkleidung möglich ist. Dies ist daher vorteilhaft, da oft erst im geschlossenen Zustand der Triebwerksverkleidung erkennbar ist, wo Spalte und/oder Überlappungen von Verkleidungsbauteilen oder dergleichen liegen.

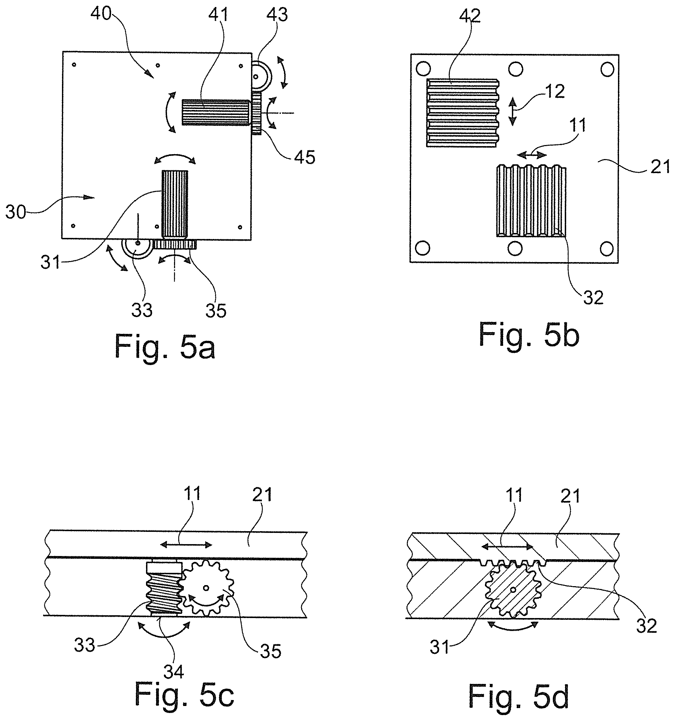

Der erste Teil der Verstelleinrichtung des Scharniers am ersten Scharnierelement 51 umfasst eine erste Zahnstangen-Ritzel-Anordnung 30 und eine zweite Zahnstangen-Ritzel-Anordnung 40. Die beiden Zahnstangen-Ritzel-Anordnungen 30, 40 sind im Detail aus den Fig. 3 und 5a, 5b, 5c und 5d ersichtlich.

Die erste Zahnstangen-Ritzel-Anordnung 30 umfasst ein erstes Ritzel 31, einen ersten Verzahnungsbereich 32, ein erstes Schneckenelement 33 mit einem ersten Werkzeug-Eingriffsbereich 34 und ein erstes Zahnrad 35. Das erste Ritzel 31 ist mit dem ersten Zahnrad 35 verbunden, welches mit dem ersten Schneckenelement 33 kämmt. Der erste Verzahnungsbereich 32 kämmt mit dem ersten Ritzel 31 und ist im ersten Deckelbereich 21 vorgesehen (s. Fig. 5a). Der erste Werkzeug-Eingriffsbereich 34 des ersten Schneckenelements 33 kann dabei von der Außenseite durch eine Öffnung 7 erreicht werden. Somit kann durch Drehung des ersten Schneckenelements 33 das erste Ritzel 31, welches im ersten Basisbereich 20 gelagert ist, über das erste Zahnrad 35 gedreht werden. Dadurch bewegt sich der erste Deckelbereich 21 relativ zum ersten Basisbereich 20 in Richtung der ersten Richtung 11. Durch Änderung der Drehrichtung am ersten Schneckenelement wird auch eine Änderung der Richtung der Relativbewegung zwischen dem ersten Deckelbereich 21 und dem ersten Basisbereich 20 bestimmt. In Fig. 3 ist schematisch ein Werkzeug 8 zur Verstellung angedeutet.

Die zweite Zahnstangen-Ritzel-Anordnung 40 weist den gleichen Aufbau wie die erste Zahnstangen-Ritzel-Anordnung 30 mit einem zweiten Ritzel 41, einem zweiten Verzahnungsbereich 42, einem zweiten Schneckenelement 43 mit zweitem Werkzeug-Eingriffsbereich 44 und einem zweiten Zahnrad 45 auf. Wie aus Fig. 3 ersichtlich ist, ist die zweite Zahnstangen-Ritzel-Anordnung 40 in einem Winkel von 90° zur ersten Zahnstangen-Ritzel-Anordnung 30 angeordnet. Dadurch wird eine Verstellbarkeit des ersten Deckelbereichs 21 relativ zum ersten Basisbereich 20 in der zweiten Richtung 12 möglich.

Fig. 4 zeigt schematisch ein Fixierelement, welches zur Fixierung des ersten Scharnierelements 51 an dem Gehäuseteil 2 dient. Hierbei umfasst das Fixierelement einen Gewindebolzen 14, welcher durch das Gehäuseteil 2 und die Befestigungsöffnung 54 hindurchgeführt ist und mittels einer Mutter 15 am ersten Deckelbereich 21 gesichert ist. Dabei ist ein Spiel 16 in der Befestigungsöffnung 54 vorgesehen, um eine Relativerstellung zwischen erstem Basisbereich 20 und erstem Deckelbereich 21 zu ermöglichen.

Damit die Triebwerksverkleidung 1 möglichst strömungsgünstig ist, kann nach erfolgter Verstellung die Öffnung 7 z. B. mittels einer Verschlusskappe 9 verschlossen werden. Dies ist in Fig. 3 angedeutet.

Die Verstellung in die erste und zweite Richtung kann somit einfach und kostengünstig ausgeführt werden. Dabei kann in Abhängigkeit von einer Wahl einer Zähnezahl des Ritzels und der auf dem ersten Deckelbereich 21 vorgesehenen ersten und zweiten Verzahnungsbereiche eine hohe Genauigkeit bei der Verstellung erreicht werden.

Es sei angemerkt, dass zur Fixierung der Relativposition zwischen dem ersten Basisbereich 20 und dem ersten Deckelbereich 21 Verriegelungseinrichtungen vorgesehen werden können, um ein unbeabsichtigtes Verstellen zu vermeiden. Besonders bevorzugt sind derartige Verriegelungseinrichtungen in den Verschlusskappen 9 vorgesehen, welche dann eine Position der Schneckenelemente 33, 43 fixieren, sodass eine Bewegung zwischen Ritzel und Verzahnungsbereich nicht mehr möglich ist.

Die Verstellung in die dritte Richtung 13 wird am zweiten Teil der Verstelleinrichtung am zweiten Scharnierelement 52 vorgenommen. Hierbei umfasst der zweite Teil der Verstelleinrichtung, wie insbesondere aus Fig. 6 ersichtlich ist, eine Gewindeverbindung 60 zwischen dem zweiten Basisbereich 22 und dem zweiten Deckelbereich 23. Die Gewindeverbindung 60 ist durch einen Gewindebolzen 61 und ein Innengewinde 62 bereitgestellt. Der Gewindebolzen 61 weist einen dritten Werkzeug-Eingriffsbereich 63 auf, welcher über Öffnungen 7 von einer Außenseite der Triebwerksverkleidung erreichbar ist.

Der Gewindebolzen 61 ist dabei, wie aus Fig. 6 ersichtlich ist, zwischen der ersten Platte 22a und der zweiten Platte 22b drehbar, aber verliersicher angeordnet. Hierbei weist die zweite Platte 22b einen stufenförmigen Absatz 24 auf, welcher einen Kopf 64 des Gewindebolzens 61 verliersicher hält.

Wie aus Fig. 6 ersichtlich ist, ist die Gewindeverbindung am zweiten Scharnierelement 52 dabei zwischen einem ersten Schenkel 52a und einem zweiten Schenkel 52b angeordnet.

Zur Fixierung des zweiten Basisbereichs 22 am zweiten Deckelbereich 23 ist ein Fixierelement 70, z. B. eine Schraube, mit einem Gewindebereich 71 und einem gewindefreien Bereich 72 vorgesehen. Das Fixierelement 70 wird am Gewindebereich 71 mittels einer Mutter 73 an dem zweiten Basisbereich 22 fixiert (sh. Fig. 6). Die gewindefreien Bereiche 72 dienen dabei als Führungsbereiche zur Führung des zweiten Deckelbereichs 23 bei einer Verstellung.

Eine Fixierung zwischen dem zweiten Basisbereich 22 und dem zweiten Deckelbereich 23 erfolgt z. B. über Sicherungselemente 17, die, wie in Fig. 6 gezeigt, an den Enden der Fixierelemente 70 und des Gewindebolzens 61 vorgesehen werden.

Somit weist die erfindungsgemäße Triebwerksverkleidung 1 ein dreidimensional verstellbares Scharnier 5 auf, wobei das Scharnier eine Verstelleinrichtung aufweist, die auf das erste und zweite Scharnierelement 51, 52 verteilt ist. Die Scharnierelemente 51, 52 umfassen dabei jeweils einen Fußbereich mit einem Basisbereich und einem Deckelbereich, welche relativ zueinander verstellbar sind. Die Verstellung kann dabei bei geschlossener Triebwerksverkleidung von außen erfolgen.

### Bezuaszeichenliste:

- 1: Triebwerksverkleidung
- 2: Gehäuseteil oder weiteres Verkleidungsteil
- 3: erstes Türelement
- 4: zweites Türelement
- 5: Scharnier
- 6: Stoßkante
- 7: Öffnungen
- 8: Werkzeug
- 9: Verschlusskappe
- 11: erste Richtung
- 12: zweite Richtung
- 13: dritte Richtung
- 14: Gewindebolzen
- 15: Mutter
- 16: Spiel
- 17: Sicherungselement
- 20: erster Basisbereich
- 21: erster Deckelbereich
- 22: zweiter Basisbereich
- 22a: erste Platte
- 22b: zweite Platte
- 23: zweiter Deckelbereich
- 24: Absatz
- 30: erste Zahnstangen-Ritzel-Anordnung
- 31: erstes Ritzel
- 32: erster Verzahnungsbereich
- 33: erstes Schneckenelement
- 34: erster Werkzeug-Eingriffsbereich
- 35: erstes Zahnrad
- 40: zweite Zahnstangen-Ritzel-Anordnung
- 41: zweites Ritzel
- 42: zweiter Verzahnungsbereich
- 43: zweites Schneckenelement
- 44: zweiter Werkzeug-Eingriffsbereich
- 45: zweites Zahnrad
- 50: Bolzen
- 51: erstes Scharnierelement
- 52: zweites Scharnierelement
- 52a: erster Schenkel
- 52b: zweiter Schenkel
- 54: Befestigungsöffnungen
- 60: Gewindeverbindung
- 61: Gewindebolzen
- 62: Innengewinde
- 63: dritter Werkzeug-Eingriffsbereich
- 64: Kopf
- 70: Fixierelement
- 71: Gewindebereich
- 72: gewindefreier Bereich
- 73: Mutter

## Patentansprüche

1. Triebwerksverkleidung, umfassend
- wenigstens ein Verkleidungsteil (2),
- wenigstens ein Türelement (3, 4) und
- wenigstens ein Scharnier (5),
- wobei das Scharnier (5) das Türelement (3, 4) am ersten Verkleidungsteil (2) öffenbar und schließbar fixiert,
- **dadurch gekennzeichnet, dass** das Scharnier (5) dreidimensional in eine erste Richtung (11), eine zweite Richtung (12) und eine dritte Richtung (13) verstellbar ist, um eine Relativposition des Türelements (3, 4) zum Verkleidungsteil (2) zu verändern,
- wobei das Scharnier (5) ein erstes Scharnierelement (51) und ein zweites Scharnierelement (52) umfasst, wobei das erste Scharnierelement (51) einen ersten Teil einer Verstelleinrichtung umfasst, um eine Verstellung in die erste Richtung (11) und die zweite Richtung (12) zu ermöglichen, und das zweite Scharnierelement (52) einen zweiten Teil der Verstelleinrichtung umfasst, um eine Verstellung in die dritte Richtung (13) zu ermöglichen,
- wobei das erste Scharnierelement (51) einen ersten Basisbereich (20) und einen ersten Deckelbereich (21) aufweist, wobei eine Relativposition zwischen dem ersten Basisbereich (20) und dem ersten Deckelbereich (21) mittels des ersten Teils der Verstelleinrichtung veränderbar ist, und
- wobei zwischen dem ersten Basisbereich (20) und dem ersten Deckelbereich (21) eine erste Zahnstangen-Ritzel-Anordnung (30) mit einem ersten Ritzel (31) und einem ersten Verzahnungsbereich (32) für eine Verstellung in die erste Richtung (11) vorgesehen ist und/oder das zwischen dem ersten Basisbereich (20) und dem ersten Deckelbereich (21) eine zweite Zahnstangen-Ritzel-Anordnung (40) mit einem zweiten Ritzel (41) und einem zweiten Verzahnungsbereich (42) für eine Verstellung in die zweite Richtung (12) vorgesehen ist.

2. Triebwerksverkleidung nach Anspruch 1, **dadurch gekennzeichnet, dass** die erste, zweite und dritte Richtung (11, 12, 13)jeweils senkrecht zueinander sind.

3. Triebwerksverkleidung nach Anspruch 1, **dadurch gekennzeichnet, dass** die erste Zahnstangen-Ritzel-Anordnung (30) einen erstes Schneckenelement (33) umfasst, mittels welchem das erste Ritzel (31) antreibbar ist und/oder dass die zweite Zahnstangen-Ritzel-Anordnung (40) ein zweites Schneckenelement (43) umfasst, mittels welchem das zweite Ritzel (41) antreibbar ist.

4. Triebwerksverkleidung nach Anspruch 3, **dadurch gekennzeichnet, dass** das erste Schneckenelement (33) und das zweite Schneckenelement (43) jeweils einen Werkzeugs-Eingriffsbereich (34, 44) aufweist und erste und zweite Öffnungen (7) in der Triebwerksverkleidung vorgesehen sind, wobei die Werkzeug-Eingriffsbereiche (34, 44) der Schneckenelemente jeweils derart an den Öffnungen (7) angeordnet sind, dass die Werkzeug-Eingriffsbereiche (34, 44) von einer Außenseite der Triebwerksverkleidung zugänglich sind.

5. Triebwerksverkleidung nach einem der vorhergehenden Ansprüche, **dadurch gekennzeichnet, dass** das zweite Scharnierelement (52) einen zweiten Basisbereich (22) und einen zweiten Deckelbereich (23) aufweist, wobei zwischen dem zweiten Basisbereich (22) und dem zweiten Deckelbereich (23) eine Gewindeverbindung (60), insbesondere umfassend einen Gewindebolzen (61) und ein Innengewinde (62), vorgesehen ist, um eine Verstellbarkeit in die dritte Richtung (13) zu ermöglichen.

6. Triebwerksverkleidung nach Anspruch 5, **dadurch gekennzeichnet, dass** die Gewindeverbindung (60) einen dritten Werkzeug-Eingriffsbereich (63) aufweist, welcher an einer dritten Öffnung (7) in der Triebwerksverkleidung derart angeordnet ist, um von einer Außenseite der Triebwerksverkleidung zugänglich zu sein.

7. Triebwerksverkleidung nach Anspruch 5 oder 6, **dadurch gekennzeichnet, dass** der zweite Basisbereich (22) eine erste Platte (22a) und eine zweite Platte (22b) umfasst, wobei die zweite Platte (22b) einen stufenförmigen Absatz (24) aufweist, um einen Kopf (64) eines Gewindebolzens (61) der Gewindeverbindung (60) aufzunehmen.

## Claims

1. Engine cowling, comprising
- at least one cowling part (2),
- at least one door element (3, 4) and
- at least one hinge (5),
- wherein the hinge (5) fixates the door element (3, 4) at the first cowling part (2) in an openable and closable manner,
**characterized in that**
- the hinge (5) is three-dimensionally adjustable in a first direction (11), a second direction (12) and a third direction (13) in order to modify a relative position of the door element (3, 4) to the cowling part (2),
- wherein the hinge (5) comprises a first hinge element (51) and a second hinge element (52), wherein the first hinge element (51) includes a first part of an adjusting device for enabling an adjustment in the first direction (11) and the second direction (12), and the second hinge element (52) includes a second part of the adjusting device for enabling an adjustment in the third direction (13),
- wherein the first hinge element (51) has a first base area (20) and a first cover area (21), wherein a relative position between the first base area (20) and the first cover area (21) can be modified by means of the first part of the adjusting device, and
- wherein a first rack and pinion arrangement (30) with a first pinion (31) and a first toothing area (32) is provided between the first base area (20) and the first cover area (21) for an adjustment in the first direction (11), and/or a second rack and pinion arrangement (40) with a second pinion (41) and a second toothing area (42) is provided between the first base area (20) and the first cover area (21) for an adjustment in the second direction (12).

2. Engine cowling in accordance with Claim 1, **characterized in that** the first, the second and the third direction (11, 12, 13) are respectively perpendicular to one other.

3. Engine cowling in accordance with Claim 1, **characterized in that** the first rack and pinion arrangement (30) comprises a first screw element (33) by means of which the first pinion (31) can be driven, and/ or that the second rack and pinion arrangement (40) comprises a second screw element (43) by means of which the second pinion (41) can be driven.

4. Engine cowling in accordance with Claim 3, **characterized in that** the first screw element (33) and the second screw element (43) respectively have a tool meshing area (34, 44) and **in that** first and second openings (7) are provided in the engine cowling, wherein the tool meshing areas (34, 44) of the screw elements are respectively arranged at the openings (7) in such a manner that the tool meshing areas (34, 44) are accessible from an external side of the engine cowling.

5. Engine cowling in accordance with one of the preceding Claims, **characterized in that**, the second hinge element (52) has a second base area (22) and a second cover area (23), wherein a threaded connection (60), in particular comprising a threaded bolt (61) and an internal thread (62), is provided between the second base area (22) and the second cover area (23) in order to enable an adjustability in the third direction (13).

6. Engine cowling in accordance with Claim 5, **characterized in that** the threaded connection (60) has a third tool meshing area (63) that is arranged at the third opening (7) in the engine cowling so as to be accessible from the external side of the engine cowling.

7. Engine cowling in accordance with Claim 5 or 6, **characterized in that** the second base area (22) comprises a first plate (22a) and a second plate (22b), wherein the second plate (22b) has a stepped recess (24) for receiving a head (64) of a threaded bolt (61) of the threaded connection (60).

## Revendications

1. Carénage de moteur, comprenant
- au moins un élément de carénage (2),
- au moins un élément de porte (3, 4) et
- au moins une charnière (5),
- sachant que la charnière (5) fixe l'élément de porte (3, 4) au premier élément de carénage (2) de manière à être ouvrable et fermable,
**caractérisé en ce que**
- la charnière (5) est réglable de manière tridimensionnelle dans une première direction (11), une deuxième direction (12) et une troisième direction (13) pour modifier une position relative de l'élément de porte (3, 4) par rapport à l'élément de carénage (2),
- sachant que la charnière (5) comprend un premier élément de charnière (51) et un deuxième élément de charnière (52), sachant que le premier élément de charnière (51) comprend une première partie d'un dispositif de réglage pour permettre un réglage dans la première direction (11) et la deuxième direction (12), et que le deuxième élément de charnière (52) comprend une deuxième partie du dispositif de réglage pour permettre un réglage dans la troisième direction (13),
- sachant que le premier élément de charnière (51) présente une première zone de base (20) et une première zone de couvercle (21), sachant qu'une position relative entre la première zone de base (20) et la première zone de couvercle (21) est modifiable au moyen de la première partie du dispositif de réglage, et
- sachant qu'entre la première zone de base (20) et la première zone de couvercle (21) est prévu un premier agencement à crémaillère et pignon (30) avec un premier pignon (31) et une première zone de denture (32) pour un réglage dans la première direction (11), et/ ou qu'entre la première zone de base (20) et la première zone de couvercle (21) est prévu un deuxième agencement à crémaillère et pignon (40) avec un deuxième pignon (41) et une deuxième zone de denture (42) pour un réglage dans la deuxième direction (12).

2. Carénage de moteur selon la revendication n° 1, **caractérisé en ce que** la première, la deuxième et la troisième direction (11, 12, 13) sont respectivement perpendiculaires les unes aux autres.

3. Carénage de moteur selon la revendication n° 1, **caractérisé en ce que** le premier agencement à crémaillère et pignon (30) comprend un premier élément à vis sans fin (33) au moyen duquel le premier pignon (31) est actionnable, et/ ou que le deuxième agencement à crémaillère et pignon (40) comprend un deuxième élément à vis sans fin (43) au moyen duquel le deuxième pignon (41) est actionnable.

4. Carénage de moteur selon la revendication n° 3, **caractérisé en ce que** le premier élément à vis sans fin (33) et le second élément à vis sans fin (43) présentent chacun une zone d'engrènement d'outil (34, 44) et que sont prévus dans le carénage de moteur un premier et un deuxième orifice (7), sachant que les zones d'engrènement d'outil (34, 44) des éléments à vis sans fin sont disposées de telle sorte sur les orifices (7) que les zones d'engrènement d'outil (34, 44) sont accessibles d'un côté extérieur du carénage de moteur.

5. Carénage de moteur selon une des revendications précédentes, **caractérisé en ce que** le deuxième élément de charnière (52) présente une deuxième zone de base (21) et une deuxième zone de couvercle (23), sachant qu'entre la deuxième zone de base (22) et la deuxième zone de couvercle (23) est prévu un raccord fileté (60), comprenant notamment un boulon fileté (61) et un filetage intérieur (62) pour permettre une réglabilité dans la troisième direction (13).

6. Carénage de moteur selon la revendication n° 5, **caractérisé en ce que** le raccord fileté (60) présente une troisième zone d'engrènement d'outil (63) qui est disposée au niveau d'un troisième orifice (7) dans le carénage de moteur de manière à être accessible du côté extérieur du carénage de moteur.

7. Carénage de moteur selon la revendication n° 5 ou n° 6, **caractérisé en ce que** la deuxième zone de base (22) comprend une première plaque (22a) et une deuxième plaque (22b), sachant que la deuxième plaque (22b) présente un épaulement (24) étagé pour accueillir une tête (64) d'un boulon fileté (61) du raccord fileté (60).
